# EUROPEAN PATENT APPLICATION

(11) **EP 2 482 375 A1**
(43) Date of publication of application: **01.08.2012**
(21) Application number: 12152126.4
(22) Date of filing: 23.01.2012
(51) Int. Cl.: H01M 10/44, H01M 10/48, H01M 10/0525, H02J 7/00

(54) **Rechargeable battery system**

(30) Priority: 27.01.2011 JP 2011014680
(71) Applicant: Hitachi Ltd., Tokyo 100-8280 (JP)
(72) Inventor: Sasaki, Hironori, Tokyo, 100-8220 (JP); Honkura, Kohei, Tokyo, 100-8220 (JP); Yamauchi, Shin, Tokyo, 100-8220 (JP); Takeda, Kenji, Tokyo, 100-8220 (JP); Yamamoto, Tsunenori, Tokyo, 100-8220 (JP)
(74) Representative: Beetz & Partner

(57) **Abstract**

A rechargeable battery system capable of suppressing the increase in the internal resistance of a lithium ion rechargeable battery and having long life is provided. A rechargeable battery system comprising rechargeable battery modules (41) eachhaving a plurality of lithium ion rechargeable batteries (A, B, C), and a charge/discharge control means (61) for controlling assembled batteries having the rechargeable battery modules (41) connected in parallel, in which the charge/discharge control means (61) controls discharge, upon discharge of the lithium ion rechargeable batteries (A, B, C), on every lithium ion rechargeable battery modules (41) connected in parallel is adopted.

## Description

### BACKGROUND OF THE INVENTION

### 1. Field of the Invention

The present invention concerns a battery system using a non-aqueous rechargeable battery typically represented by a lithium ion rechargeable battery, and battery mounting equipment and vehicles mounting the same.

### 2. Description of the Related Art

In recent years, lithium ion rechargeable batteries have been utilized as a driving power source for vehicles such as hybrid cars, electric cars, and portable electronic equipment such as notebook computers and digital cameras.

In battery systems using such lithium ion batteries, a degradational phenomenon in which the internal resistance of a battery increases gradually during charge/discharge cycles in the battery system using such lithium ion batteries. The degradational phenomenon tends to occur in charge/discharge cycles at high current and high capacity.

Japanese Unexamined Patent Publication No. 2009-176575 discloses a technique of selecting an increase mode and a decrease mode for controlling the internal resistance of a battery to an appropriate range so that it does not increase or decrease excessively. However, there is a further room for improving the life of the lithium ion rechargeable battery.

### SUMMARY OF THE INVENTION

The present invention provides a rechargeable battery system comprising rechargeable battery modules each having a plurality of lithium ion rechargeable batteries, and a charge/discharge control means for controlling assembled batteries comprising the rechargeable battery modules which are connected in parallel, in which the charge/discharge control means conducts discharge on every lithium ion rechargeable modules connected in parallel when the lithium ion rechargeable batteries are discharged.

According to the invention, since the amount of a current discharged from one lithium rechargeable batterymodule is large and a discharge period is shortened, extension of the life of the lithium ion rechargeable battery can be expected.

### BRIEF DESCRIPTION OF THE DRAWINGS

Fig. 1 is a partially cutaway perspective view of a cylindrical non-aqueous rechargeable battery;
Fig. 2A is a schematic view of a power source system;
Fig. 2B is a view for a discharge current waveform of each module;
Fig. 3 is a system flow chart of a rechargeable battery system;
Fig. 4A is a schematic view of a power source system;
Fig. 4B is a view for a discharge current waveform of each of the rechargeable battery modules in an existent embodiment;
Fig. 4C is a view for a discharge current waveform of each of the rechargeable battery modules in a proposed embodiment;
Fig. 5 is a view for a charge/discharge current waveform of a rechargeable battery system; and
Fig. 6 shows a result of comparison of a resistance increase rate between an existent embodiment and embodiments of the present invention.

### DETAILED DESCRIPTION OF THE PREFERRED EMBODIMENTS

As a result of an earnest study on the method of controlling the lithium ion rechargeable battery, the present inventors, et al. have found that the internal resistance tends to increase more as the discharge period is longer (discharge current decreases relatively) when the electric amount to be discharged is identical.

However, the present inventors, et al. have confirmed that increase in the internal resistance of the lithium ion rechargeable battery can be suppressed by setting appropriate discharge period and discharge current.

Further, a lithium ion concentration in an electrolyte present between a positive electrode and a negative electrode of a power generation element tends to lower when the internal resistance of the lithium ion rechargeable battery increases due to charge/discharge cycles. It is estimated that lithium ion electrolytes ingredients in the electrolyte are decomposed/formed and inorganic materials, etc. are deposited as electrolyte decomposition products on the surface of the negative electrode and the positive electrode to inhibit intercalation and deintercalation of lithium ions, so that the internal resistance increases. As a result of disassembling and analyzing a degraded battery, a positive correlationship that the internal resistance increases as the ratio of the electrolyte decomposition products increases on the surfaces of the positive electrode and the negative electrode.

The present invention has been achieved based on such a finding and the invention intends to provide a battery system capable of confining the internal resistance of a battery within an appropriate range as well as battery mounting equipment and a vehicle having the battery system mounted thereon, by controlling the discharge period and the discharge current thereby suppressing increase and further decreasing the internal resistance of a lithium ion rechargeable battery.

Apreferred embodiment 1 of the invention is to be described with reference to the drawings.

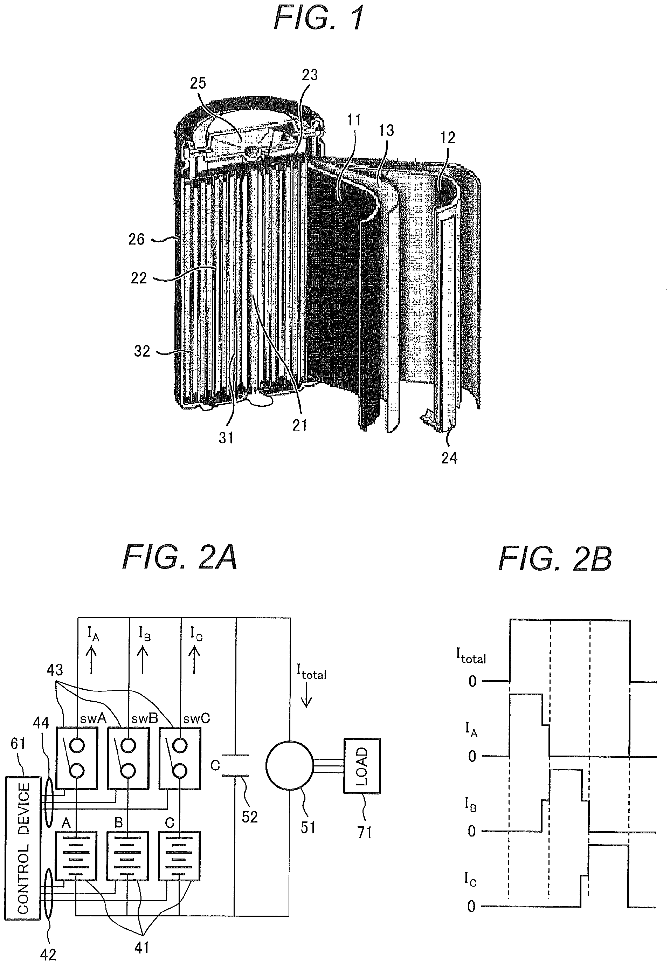

Fig. 1 shows a non-aqueous rechargeable battery (hereinafter simply referred to as a battery) of the present invention. After preparing a rolled electrode group 22 formed by spirally winding a positive electrode plate 11 comprising a composite lithium oxide as an active material and a negative electrode 12 comprising a lithium ion containing material as an active material by way of a separator 13, the rolled electrode group 22 is contained inside a battery case 26 of a bottomed cylindrical shape. A negative electrode tab 24 led out from the lower portion of the rolled electrode group 22 is welded to the bottom of the battery case 26 and then a positive electrode tab 23 led out from the upper portion of the rolled electrode group 22 is welded to a battery cap 25. A predetermined electrolyte is injected into the battery case 26, a battery cap 25 having an insulative gasket (not illustrated) attached at the periphery is attached and caulked to an opening portion of the battery case 26. The side on the winding axis 21 is defined as an inner circumferential side 31, and the outer side thereof is defined as an outer circumferential side 32.

The positive electrode active material coated to the positive electrode plate 11 includes, for example, lithium cobaltate and a modified product thereof (for example, lithium cobaltate solid-solubilized with aluminum or magnesium), lithium nickelate and a modified product thereof (nickel partially substituted with cobalt), lithium manganate and a modified productthereof,and compositeoxidesthereof (nickel, cobalt, manganese).

As the conductive additive, carbon black such as acetylene black, ketjen black, channel black, furnace black, lamp black and thermal black or various kinds of graphites can be used alone or in combination.

For the positive electrode binder, polyvinylidene fluoride (PVdF), modified product of polyvinylidene fluoride, polytetrafluoroethylene (PTFE), a rubber particle binder having acrylate units, etc. can be used. An acrylate monomer or an acrylate oligomer introduced with reactive functional groups can also be mixed in the binder.

Then, as the negative electrode active material coated to the negative electrode plate 12, various kinds of natural graphites, artificial graphites, silicone type composite materials such as silicide and various kinds of metal plastic materials can be used.

As the negative electrode binder, various kinds of binders including PVdF and modification products thereof can be used. With a view point of improving the lithium ion acceptability, styrene-butadiene copolymer rubber particles (SBR) and modification products thereof used together with or with addition of a small amount of a cellulose type resin such as carboxymethyl cellulose (CMC) is more preferred.

As the conductive additive, carbon black such as acetylene black, ketjen black, channel black, furnace black, lamp black, and thermal black or various kinds of graphites can be used alone or in combination.

While the material of the separator is not particularly restricted so long as the material has a composition capable of withstanding the range for the condition of using a lithium ion rechargeable battery, a microporous olefinic resin film such as of polyethylene or polypropylene is used generally alone or in a composite form, which is preferred as an embodiment. The thickness of the separator is not restricted and a thickness from 10 to 40 µm is preferred.

For the electrolyte, various lithium compounds such as LiPF₆ and LiBF₄ can be used as the electrolyte salt. Further, for the solvent, ethylene carbonate (EC), dimethyl carbonate (DMC), diethyl carbonate (DEC), and methyl ethyl carbonate (MEC) can be used alone or in combination. Further, for forming a good membrane on the positive electrode and the negative electrode thereby ensuring the stability upon overcharge/over discharge, vinylene carbonate (VC), cyclohexylbenzene (CHB), and modification products thereof are used preferably.

The shape of the rolled electrode group in the invention may not necessarily be in a regular cylindrical shape, but may be an elliptic cylindrical shape in which the cross section of the rolled electrode group is elliptic or a square columnar shape in which the cross section of the rolled electrode group is rectangular. As a typical mode of use, it is preferred that the rolled electrode group and the electrolyte are filled in a bottomed cylindrical battery case and a tab for drawing a current from the electrode plate is sealed in a state welded to the cap and the battery case, but the mode is not restrictive thereto.

The material of the battery case for containing the rolled electrode group is not particularly restricted and those excellent in the strength, the corrosion resistance, and the workability such as a battery case comprising a plated iron and a battery case made of stainless steel for providing corrosion resistance are preferred. Further, the weight can be decreased by using an aluminum alloy or various engineering plastics, and various engineering plastics and the metals can be used in combination.

Then, Fig. 2A shows a rechargeable battery system. A lithium ion rechargeable battery module 41 comprises a plurality of the batteries shown in Fig. 1 in serial, parallel, or serial parallel combination. A plurality of the lithium ion rechargeable battery modules 41 are connected in parallel to form assembled batteries.

For detecting the state of each of the lithium ion rechargeable batterymodules 41, a control device 61 is provided. The control device 61 has a battery state detection means 42 for detecting a battery voltage, a charge/discharge current, a battery surface temperature, and a charge/discharge period of the lithium ion rechargeable battery module 41, and is adapted to calculate a cumulative charge/discharge period and a cumulative charge/discharge electric amount on the basis of the detected values.

Further, the lithium ion rechargeable battery modules 41 and power switching devices 43 are combined in series, and the control device 61 transmits control signals by way of a control signal transmission means 44 to the power switching devices 43 in accordance with the detection value obtained from the battery state detection means 42 of the lithium ion rechargeable battery modules 41 and the amount of demanded power from an electric load 71.

The control device 61 includes a microcomputer having CPU, ROM, and RAM and operating on a predetermined program. Then, the device 61 controls charge and discharge of the lithium ion rechargeable battery modules 41 based on the detected value obtained from the battery state detection means 42.

A voltage detection means as one of the battery state detection means 42 detects the voltage of the lithium ion rechargeable battery module. As the battery voltage to be detected, voltages of one for the batteries forming the lithium ion rechargeable battery module, a group of batteries in which a plurality of batteries are connected in series, and assembled batteries having a plurality of batteries in serial and parallel connection may be considered, but the battery voltage to be measured is not particularly restricted.

A current detection means as one of the battery state detectionmeans 42 detects the value of charge/discharge current. As the detection method, current detection by using a galvanometer, a shunt resistance, a cramp meter, or the like may be considered but this is not restrictive and any means can be used so long as the current value is detected.

A temperature detection means as one of the battery state detection means 42 detects the temperature of the lithium ion rechargeable battery module 41. For the means detecting the temperature, while thermocouples, thermistors, etc. may be considered they are not particularly restricted. As the position for detecting the temperature, the battery surface, inside of the battery, the surface of the case containing the lithium ion rechargeable batteries, and the surrounding circumstance of the lithium ion rechargeable battery module 41 may be considered.

A timer as one of the battery state detection means 42 measures the time with respect to charge and discharge for the lithium ion rechargeable battery module 41. For example, the timer measures the lapse of time after starting discharge, etc.

The power switching device 43 may include a semiconductor switch and a mechanical switch. Further, a power conversion device may include an input inverter, a DC-DC converter, etc. but they are not restrictive so long as they can control the current value upon charge and discharge to and from the lithium ion rechargeable battery modules 41.

A power conversion device 51 is a device for converting a DC current obtained from the lithium ion rechargeable battery into an alternating current depending on the load and usually an inverter is used preferably. Further, by connecting a capacitor 52 in parallel with the power conversion device 51, a stable power can be supplied to the power conversion device 51 by discharge from the capacitor 52 when power supply to the power conversion device 51 is reduced instantaneously to zero.

For example, the electric load 71 may be a heater, an electromotive brake, an electromotive power steering, or an electromotive motor in automobiles.

As described above, according to this embodiment, a control device 61 is provided to a lithium ion rechargeable battery module 41 in a rechargeable battery system in which a plurality of lithium ion rechargeable battery modules 41 are connected in parallel. Further, charge, discharge, recessing period, etc. of the lithium ion rechargeable battery modules 41 are controlled in the control device 61 as shown in Fig. 2B depending on the detection value obtained in the battery state detection means 42 and the state of the electric load 71.

Then, a charge/discharge control method of the control device 61 is to be described.

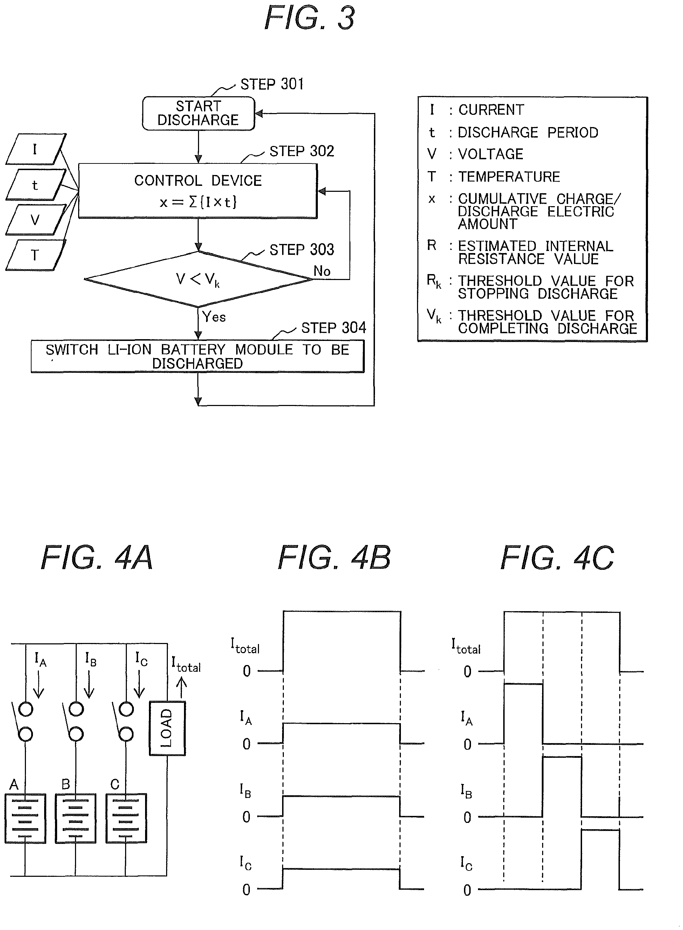

Fig. 3 is a flow chart for a rechargeable battery system according to a second embodiment of the invention.

At first, an instruction for starting discharge of the lithium ion rechargeable battery is sent as a signal from the control device 61 to the lithium ion rechargeable battery module 41A to be discharged (step 301).

The lithium ion rechargeable battery module 41A receiving the signal measures the discharge current I, the discharge period (lapse of time from the start of discharge) t, the battery voltage V, and the battery temperature T by the battery state detection means 42 and sends the signals to the control device 61.

The control device 61 calculates a cumulative charge/discharge electric amount x based on the four parameters (V, I, T, t) (step 302) . The control device 61 calculates the discharge stop voltage Vₖ based on the calculated cumulative charge/discharge electric amount x and sends the discharge stop voltage Vₖ to the lithium ion rechargeable battery module 41A. The discharge stop voltage Vₖ is determined while considering the capacity and the life of the battery. As the battery capacity decreases, the usable battery voltage changes correspondingly.

While description has been made that the cumulative charge/discharge electric amount x is calculated based on the four parameters (V, I. T, t), the amount can be calculated when at least two of the discharge current I and the discharge period (lapse of time from the start of discharge) t are determined.

The lithium ion rechargeable battery module 41A measures the battery voltage V during discharge at any time and compares the discharge stop voltage Vₖ and the battery voltage V detected by the battery state detection means 42. When the battery voltage V becomes lower than the discharge stop voltage Vₖ, discharge is stopped and the signal for discharge stop is sent to the control device 61 (step 303). On the other hand, when the battery voltage V is higher than the discharge stop voltage Vₖ, discharge is continued.

When receiving the discharge stop signal, the control device 61 continues discharge while switching the control target from the lithium ion rechargeable battery module 41A having been discharged so far to the lithium ion rechargeable battery module 41B to be discharged next (step 304). In this instance, the control device 61 controls so as to partially overlap the discharge period of the lithium ion rechargeable battery module 41A having been discharged so far, and the discharge period of the lithium ion rechargeable battery module 41B to be discharged next in order to prevent instantaneous stopping of power supply at the instance of switching the lithium ion rechargeable battery modules.

When the target for discharge is switched from the lithium ion rechargeable battery module 41B to the lithium ion rechargeable battery module 41C, it may be also controlled in the same manner as in the step 301 to step 304.

While the explanation has been made that the control device 61 determines the cumulative charge/discharge electric amount x or the discharge stop voltage Vₖ, this may be executed by another function/means such as the lithium ion rechargeable battery module 41A depending on the case. What is important is that discharge of a lithium ion rechargeable battery module 41 is started after discharging of the proceeding lithium ion rechargeable battery module 41 by a predetermined amount (for predetermined time).

As described above, in the lithium rechargeable battery system according to this embodiment, the discharge current and discharge period are not different from those of the existent rechargeable lithium ion battery system in which a plurality of lithium ion rechargeable battery modules are connected in parallel and a plurality of lithium ion rechargeable battery modules are discharged all at once. However, when it is noted on the lithium ion rechargeable battery module, the discharge period can be made shorter (discharge current can be increased relatively higher) in the lithium rechargeable batter system according to the embodiment. That is, increase in the internal resistance can be suppressed by so much as the discharge period is shorter, and a long life rechargeable battery system can be provided.

As the control method, when the lithium ion rechargeable modules that discharge during the discharge period is switched, stable power can be supplied to a load by controlling the lithium ion rechargeable battery module under discharge and the lithium ion battery module to be discharged next such that the discharge periods are overlapped partially in order to prevent the discharge current from being reduced to zero instantaneously.

As the control method, when the lithium ion rechargeable battery module is charged, it can be seen from the Japanese Unexamined Patent Publication No. 2009-176575 that the battery internal resistance tends to increase more as the discharge current becomes higher. Then, in a case of charging, the batteries connected in parallel are controlled such that a plurality of the batteries are charged in parallel. Since the value of the current to be charged can be divided by such charge control, the charge current value to one lithium ion rechargeable battery module can be lowered relatively.

Then, the result of an experiment for verifying the effect of the invention is to be described.

As the electrode material for the lithium ion rechargeable battery used in the verification test for the effect of the invention, LiNi_{0.33}Mn_{0.33}CO₀.₃₃O₂ was used as the positive electrode active material, carbon black was used for the conductive additive, and polyvinylidene fluoride was used for the binder. Less graphitizable carbon was used for the negative electrode active material, carbon black was used for the conductive additive, and polyvinylidene fluoride was used for the binder. In the verification test, a cylindrical battery having a size of 18 mm diameter and 65 mm length was used.

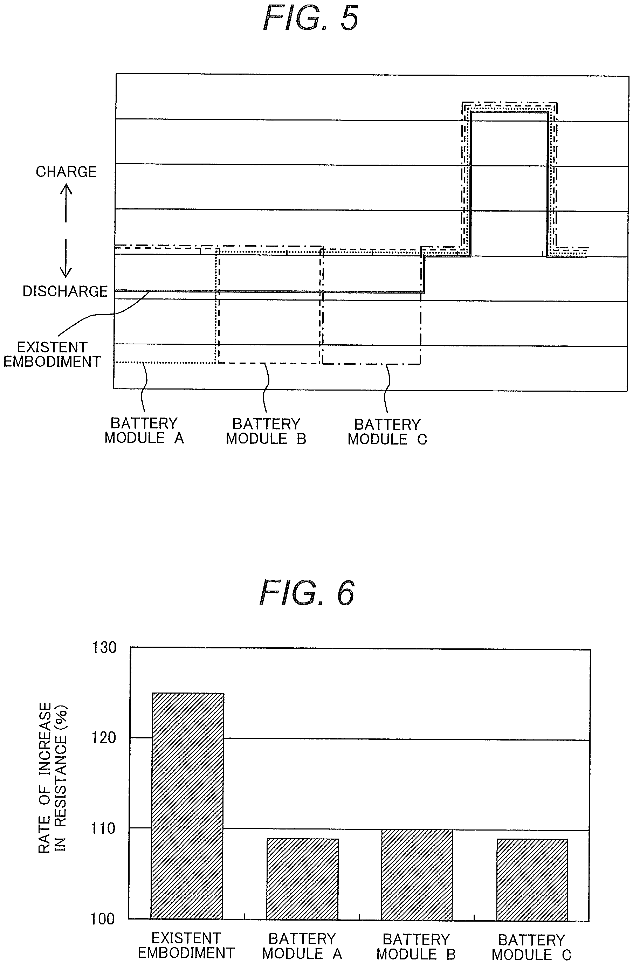

Fig. 4A-4C and Fig. 5 show a charge/discharge pattern for the test that was carried out for verifying the effect of the invention. In the existent discharge pattern, the lithium ion rechargeable batteries were discharged at predetermined discharging current and discharging time. On the contrary to the prior art shown in Fig. 4B, in the rechargeable battery system proposed by the present invention shown in Fig. 4C, discharge is performed on every battery modules connected in parallel during discharge. While the discharge current flowing from one battery module increases, the discharge period is shortened as compared to the prior art. Further, as can be seen from Fig. 4C and Fig. 5, the open circuit time after the completion of discharge is longer in the order of the battery modules A > B > C. The effect of the rechargeable battery system proposed in the invention was verified by the charge/discharge pattern as described above.

Fig. 6 shows the result of measuring the internal resistance after performing charge/discharge pattern of the prior art and the pattern proposed by the invention shown in Fig. 5 by 1,000 cycles. The ordinate represents the rate of increase assuming the initial internal resistance as 100%. In view of Fig. 6, since the rate of increase in the internal resistance for the proposed pattern against the existent art is lower by about 15 point in all of the battery modules A, B, and C (proposed embodiment) compared with the existent embodiment, it is considered that the rechargeable battery system proposed by the invention has an effect of suppressing the increase in the internal resistance. Further, even when difference is caused in the open circuit time after discharge, since the rate of increase in the internal resistance less varies for the battery modules A, B, and C connected in parallel, it is considered that the difference of the open circuit time after discharge causes no problems.

The present invention is not restricted to the embodiments described above but the invention can be applied appropriately within a range not departing from the gist of the invention.

For example, while a wound type lithium ion rechargeable battery was used as the battery, the inventionmay also be applied to a stacked type lithium ion rechargeable battery in which a plurality of positive electrode plates and a plurality of negative electrode plates are stacked alternately by way of separators.

## Claims

1. A rechargeable battery system comprising rechargeable battery modules (41) each having a plurality of lithium ion rechargeable batteries (A, B, C), and a charge/discharge control means (61) for controlling assembled batteries (A, B, C) having the rechargeable battery modules (41) connected in parallel, in which
the charge/discharge control means (61), when the voltage of a lithium ion rechargeable battery module (41) during discharge becomes lower than a predetermined discharge stopping voltage, stops the discharge of the lithium ion rechargeable battery module (41) during discharge and starts discharge from another lithium ion rechargeable battery module (41) thereby conducting discharge on every lithium ion rechargeable battery modules (41) connected in parallel.

2. A rechargeable battery system according to claim 1, wherein
the charge/discharge control means (61) charges, in parallel, a plurality of lithium ion rechargeable battery modules (41) connected in parallel when the lithium ion rechargeable batteries (A, B, C) are charged.

3. A rechargeable battery system according to claim 1 or 2, wherein
the charge/discharge control means (61) determines the predetermined discharge stop voltage based on a cumulative charge/discharge electric amount.

4. A rechargeable battery system according to at least one of claims 1 to 3, wherein
the system comprises a state detection means (42) for detecting the charge/discharge current and the charge/discharge period of the lithium ion rechargeable battery module (41), and
the charge/discharge control means (61) calculates the cumulative charge/discharge electric amount based on the charge/discharge current and the charge/discharge period detected by the state detection means (42).

5. A rechargeable battery system according to at least one of claims 1 to 4, wherein
the charge/discharge control means (61) conducts control such that the discharge period of the lithium ion rechargeable batterymodule (41) to be stopped for discharge and the discharge period of the other lithium ion rechargeable battery module (41) to be started for discharge are partially overlap to each other.
